# EUROPEAN PATENT SPECIFICATION

(11) **EP 2 405 337 B1**
(45) Date of publication and mention of the grant of the patent: **16.09.2015**
(21) Application number: 11172680.8
(22) Date of filing: 05.07.2011
(51) Int. Cl.: G06F 3/048, G06F 1/16, G06F 17/30

(54) **Method for presenting human machine interface, handheld device using the same, and computer readable medium therefor**
Verfahren zur Darstellung einer Mensch-Maschinen-Schnittstelle, tragbare Vorrichtung damit und computerlesbares Medium dafür
Procédé de présentation d'interface homme-machine, dispositif portable l'utilisant et son support lisible sur ordinateur

(30) Priority: 06.07.2010 US 361532 P
(43) Date of publication of application: 11.01.2012
(73) Proprietor: HTC Corporation, Taoyuan City 330 (TW)
(72) Inventor: Chiang, Chi-Pang, Taoyuan City Taoyuan County 330 (TW)
(74) Representative: 2K Patentanwälte Blasberg Kewitz & Reichel

(56) References cited:
- EP-A1- 1 983 730
- EP-A1- 2 136 281
- EP-A1- 2 166 466
- EP-A1- 2 175 343
- EP-A1- 2 175 356
- US-A1- 2001 015 759
- US-A1- 2002 075 329
- US-A1- 2008 165 152
- US-A1- 2009 174 680
- US-A1- 2009 207 184

## Description

### BACKGROUND

### FIELD OF THE INVENTION

The invention generally relates to a method for presenting a human machine interface, and more particularly, to a method for presenting a human machine interface according to the orientation of a handheld device, the handheld device using the same method, and a computer readable medium thereof.

### DESCRIPTION OF RELATED ART

Presently, a G-sensor is usually equiped within a handheld device (for example, a smart phone or a tablet PC) to detect the current orientation of user operations and adjust the screen display according to the current orientation. However, in most cases, when a handheld device is changed from a portrait layout into a landscape layout, the same information or a similar image is simply presented to the user, and the user does not get diversified information from the change of the orientation. In order to get the desired information, the user may have to perform several switch operations or select corresponding items in the menu, which are not inconvenient. Therefore, operation experience of the user does not change with the orientation of the handheld device.

EP 2 175 343 A1 discloses a method and handheld electronic device having a graphical user interface which arranges icons dynamically. In accordance with one embodiment, there is provided a method for providing an icon menu with dynamic icon arrangement within a graphical user interface (GUI) displayed on a display screen of a handheld electronic device, the method comprising: (i) determining a screen orientation of the GUI in accordance with a device orientation; (ii) rendering a first user interface screen in a portrait screen orientation comprising a reduced icon menu having a plurality of icons and a secondary input area adjacent to the reduced icon menu when the screen orientation is a portrait screen orientation; (iii) rendering a second user interface screen in a landscape screen orientation comprising a first expanded icon menu having a plurality of icons when the screen orientation is a landscape screen orientation, wherein the first expanded icon menu has more icons than the reduced icon menu; and (iv) displaying the rendered first or second user interface screen on the display screen.

US 2008 / 0165152 A1 discloses a method of modal change based on orientation of a portable multifunction device. In accordance with some embodiments, a computer-implemented method is performed at a portable multifunction device with a rectangular touch screen display that includes a portrait view and a landscape view. The method includes detecting the device in a first orientation, and while the device is in the first orientation, displaying an application in a first mode on the touch screen display in a first view. The method also includes detecting the device in a second orientation, and in response to detecting the device in the second orientation, displaying the application in a second mode on the touch screen display in a second view. The first mode of the application differs from the second mode of the application by more than a change in display orientation.

US 2009 / 0174680 A1 discloses a portable multifunction device, method, and graphical user interface for viewing and managing electronic calendars. In accordance with some embodiments, a computer-implemented method is performed at a portable multifunction device with a touch screen display. The touch screen display includes a long axis, a short axis, a portrait view and a landscape view. The computer-implemented method includes executing a calendar application. In response to detecting the portable multifunction device in a first orientation that comprises a substantially vertical orientation of the long axis, a calendar is displayed for a first time period in the portrait view. In response to detecting the portable multifunction device in a second orientation that comprises the substantially vertical orientation of the short axis, a calendar is displayed for a second time period in the landscape view. The second time period is longer than and includes the first time period.

EP 2 136 281 A1 discloses a device and method for controlling the output of information elements. The device has an output unit for outputting an information element in two different output modes, and a sensor for receiving a situation of the output unit. A control unit is provided for control of the output unit as a function of the situation into user optimized output mode. An independent claim is included for a method for controlling an output of information element.

US 2009 / 0207184 A1 discloses a method of information presentation based on display screen orientation. A handheld device presents information on a display screen in alternate formats. The device determines its orientation relative to a device user and selects a format based on that orientation. The displayed information may also be scrolled or zoomed based on a detected motion of the device.

EP 1 983 730 A1 discloses a portable electronic device which is adapted to change its operation mode. When a rotation of the portable electronic device is detected, the operation mode is changed according to the angle of rotation, and a user interface corresponding to the changed operation mode is output by a display unit. The display unit includes operation-mode identifiers and a hold unit for holding the mode change. Inadverent rotation is detected by comparing playing time or time since last key input with a threshold value. This method intuitively changes the mode based on a rotation of the device without requiring a complicated and unnecessary key input, and provides a more convenient and faster user interface.

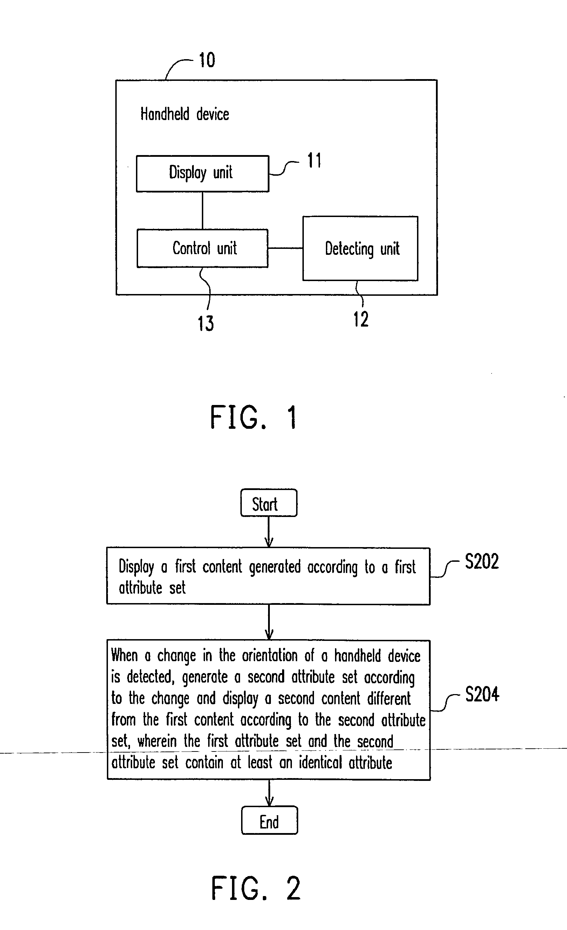

In US 2002 / 075 329 A1 there is disclosed a human machine interface presenting method wherein beside the pictures or icons to be displayed in a browser window (see Fig. 1) also a "date range box 118" is displayed (see [0018]) which allows the user to determine the time period of the pictures to be browsed.

In US 2001 / 0 015 759 A1 there is disclosed a camera being provided with an arrangement for location-stamping image recordings and with a subsystem for recording location data independently of making an image recording. The independently-recorded location data is sequentially associated with the image recordings and can be used subsequently to retrieve corresponding photos from a photo archive.

EP 2 166 466 A1 discloses a system and method for accessing digital media based on the time and location the media was captured. The digital media is associated with time and location information. The media is presented along with a geographical representation of where the media was captured and an indication of time when the media was captured.

EP 2 175 356 A1 discloses a user interface hallowing a unified approach for organizing and navigating data on a computing device. A method executed on a processor for displaying on a screen a set of entities associated with at least one of at least two particular entities, comprises the steps of: displaying on the screen indicia of the at least two particular entities; determining the distance on the screen between the displayed indicia of the at least two particular entities; determining the set of entities based on the distance on the screen between the indicia of the at least two particular entities; and displaying on the screen indicia for the set of entities.

There remains a need for an improved user interface for viewing pictures on a handheld device.

### SUMMARY

Accordingly, the present disclosure is directed to a method for presenting a human machine interface, a handheld device using the same method, and a computer readable medium thereof, where when the handheld device is detected to change from a portrait layout to a landscape layout, an originally displayed local view human machine interface is switched to an overview human machine interface so that a plurality of information items with different attributes is presented to a user.

According to the present disclosure, a human machine interface presenting method is provided. The human machine interface presenting method is adapted to a handheld device and includes following steps: (a) displaying a first content generated according to a first attribute set; (b) detecting a change in the orientation of the handheld device; (c) generating a second attribute set according to the change; and (d) displaying a second content different from the first content according to the second attribute set, where the first attribute set and the second attribute set contain at least an identical attribute.

According to the present disclosure, the first content is a first human machine interface, the second content is a second human machine interface, the change is that the handheld device changes from a portrait layout to a landscape layout, and in the foregoing step (d), the display unit is controlled to change from displaying the first human machine interface to displaying the second human machine interface according to the second attribute set.

The user interface for viewing pictures according to the present invention is defined in the independent claims.

The features, aspects, and advantages of the invention will be described and become more apparent from the detailed description when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate examples and, together with the description, serve to explain the principles of the invention.

FIG. 1 is a function block diagram of a handheld device according to principles of the invention.

FIG. 2 is a flowchart of a method for a human machine interface presenting method according to principles of the invention.

FIG. 3A is a schematic diagram of a first human machine interface.

FIG. 3B is a schematic diagram of a first example of a second human machine interface .

FIG. 3C is a schematic diagram of a second example of a second human machine interface.

FIG. 3D is a flowchart of a human machine interface presenting method according to the first example.

FIG. 3E is a flowchart of a human machine interface presenting method according to the second example.

FIG. 4A is a schematic diagram of another first human machine interface.

FIG. 4B is a schematic diagram of a third example of a second human machine interface.

FIG. 4C is a schematic diagram of a second human machine interface according to the invention.

FIG. 4D is a flowchart of a human machine interface presenting method according to the third example.

FIG. 4E is a flowchart of a human machine interface presenting method according to the invention.

FIG. 5A is a schematic diagram of another first human machine interface.

FIG. 5B is a schematic diagram of another example of a second human machine interface.

FIG. 5C is a flowchart of a human machine interface presenting method according to the last example.

FIG. 5D is another flowchart of a human machine interface presenting method according to another example.

### DETAILED DESCRIPTION

FIG. 1 is a function block diagram of a handheld device 10 according to principles of the invention. When the orientation of the handheld device 10 changes, the handheld device 10 switches between a local view human machine interface and an overview human machine interface. The overview human machine interface can also be referred to as a global view human machine interface, which provides information different from that provided by the local view human machine interface or presents diversified information to a user, so that the human machine interfaces can be operated conveniently and the operation experience of the user can be improved.

For example, the orientation can be changed from a portrait layout to a landscape layout or from the landscape layout to the portrait layout.

The handheld device 10 includes a display unit 11, a detecting unit 12, and a control unit 13. The control unit 13 is connected to the display unit 11 and the detecting unit 12. The display unit 11, which can be a display or a touch screen, is configured for displaying a first content, where the first content is generated according to a first attribute set. In addition, the detecting unit 12, which can be a G-sensor, is configured for detecting a change in the orientation of the handheld device 10 (especially when the orientation changes from a portrait layout to a landscape layout).

Moreover, when the detecting unit 12 detects a change in the orientation of the handheld device 10, the control unit 13 can control the display unit 11 to switch between a first human machine interface and a second human machine interface. The control unit 13 can include a processor unit, an operating system, and related display firmwares (software programs) for driving or controlling the display unit 11 to present an image of a human machine interface. To be illustrated more clearly, the control unit 13 generates a second attribute set according to the change in the orientation of the handheld device 10 and controls the display unit 11 to display a second content different from the first content according to the second attribute set, where the second attribute set and the first attribute set contain at least an identical attribute.

It is noted that an attribute can be a location attribute, a date attribute, a stock market attribute, or a time attribute. The first attribute set and the second attribute set respectively contain at least an attribute, and at least one of the attributes in the first attribute set has to be the same as at least one of the attributes in the second attribute set. For example, the first attribute set contains a location attribute, and the second attribute set contains a location attribute and a date attribute, where the location attribute is the same attribute in the first attribute set and the second attribute set. The functionality of the attributes will be further described below.

The first content is a first human machine interface, and the second content is a second human machine interface. To be illustrated more clearly, the first human machine interface is a "local view human machine interface", and the second human machine interface is an "overview human machine interface". The change can be that the handheld device 10 changes from a portrait layout to a landscape layout. The control unit 13 controls the display unit 11 to change from displaying the first human machine interface to displaying the second human machine interface according to the second attribute set.

Operation and technical characteristics of the control unit 13 will be described below in detail in accordance with FIG. 2. FIG. 2 is a flowchart of a human machine interface presenting method according to principles of the invention. The human machine interface presenting method starts from step S202. In the step S202, the control unit 13 controls the display unit 11 to display a first content generated according to a first attribute set.

In step S204, when the detecting unit 12 detects a change in the orientation of the handheld device 10, the control unit 13 generates a second attribute set according to the change and controls the display unit 11 to display a second content different from the first content according to the second attribute set, where the first attribute set and the second attribute set contain at least an identical attribute. In other words, when the detecting unit 12 detects that the handheld device 10 changes from a portrait layout to a landscape layout, the control unit 13 controls the display unit to change from displaying the first human machine interface to displaying the second human machine interface according to the second attribute set.

On the other hand, when the handheld device 10 is in the portrait layout and presents the first human machine interface, it does not display the information items presented in the second human machine interface, and the handheld device 10 displays just part of the information items in the portrait layout, or displays the information items in a stacked manner in the portrait layout.

Technical contents of the foregoing steps S202 and S204 will be described in more detail in accordance with six following examples and accompanying drawings.

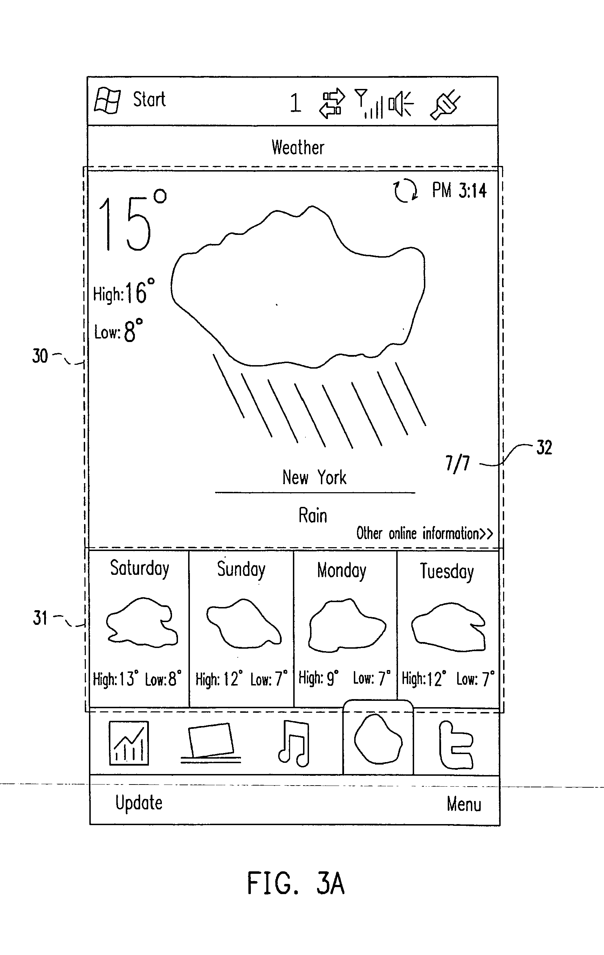

FIG. 3A is a schematic diagram of a first human machine interface. Referring to FIG. 3A, the first human machine interface includes a current day information image 30 and a future information image 31 of a weather information image. The weather information of the current day of a location and a location number 32 are displayed in the current day information image 30, where the location number 32 indicates the total number of other locations to which the user can switch (for example, through a gesture or selecting a menu function).

The weather forecast information in the next several days (or the next week) of a same location is displayed in the future information image 31. However, when the user wants to acquire the weather information of other locations, the conventional techniques do not provide a method for instantly presenting the information, and thus the user can just acquire the weather information of other locations through several switching gestures or menu function selections, which can be very inconvenient.

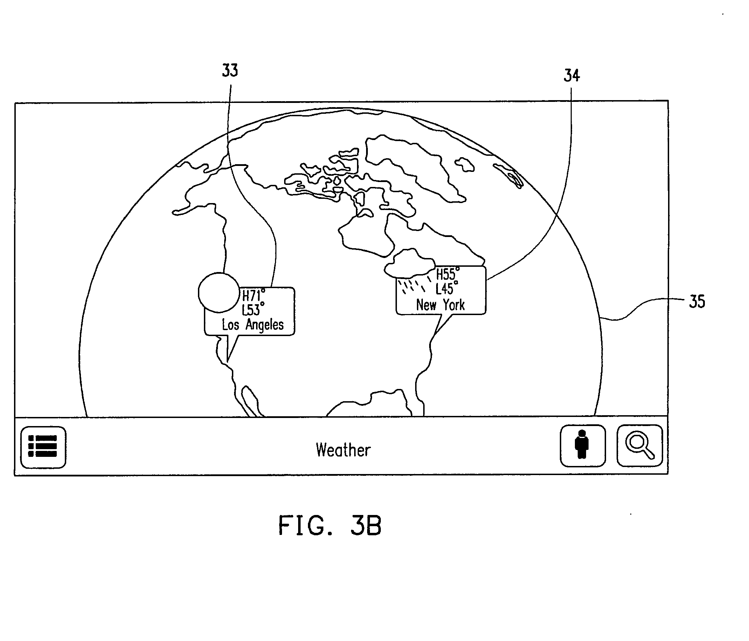

FIG. 3B is a schematic diagram of a first example of a second human machine interface. In the present example, when the user changes the orientation of the handheld device 10 from a portrait layout to a landscape layout, in the step S204, the control unit 13 of the handheld device 10 generates a second attribute set according to the change and controls the display unit 11 to display a second content different from the first content according to the second attribute set. Namely, the control unit 13 controls the display unit 11 to switch from the first human machine interface presented by the handheld device 10 in the portrait layout to the second human machine interface according to the second attribute set. In the first embodiment, the first attribute set contains just one location and the weather information thereof, while the second attribute set contains the weather information of different locations.

The second human machine interface is as shown in FIG. 3B. Referring to FIG. 3B, a 3D earth image 35 is displayed in the second human machine interface, and the 3D earth image 35 displays the weather information (for example, the first location 33 and the second location 34 shown in FIG. 3B) of two or more locations. The user can switch to other locations in the 3D earth image 35 through gestures (for example, the user can rotate the 3D earth image 35 to switch to other locations, and the weather information of two or more other locations is still displayed after the switching). Thus, the human machine interface presenting method can provide general weather information of two or more locations at the same time and greatly reduce the number of switching operations performed by a user.

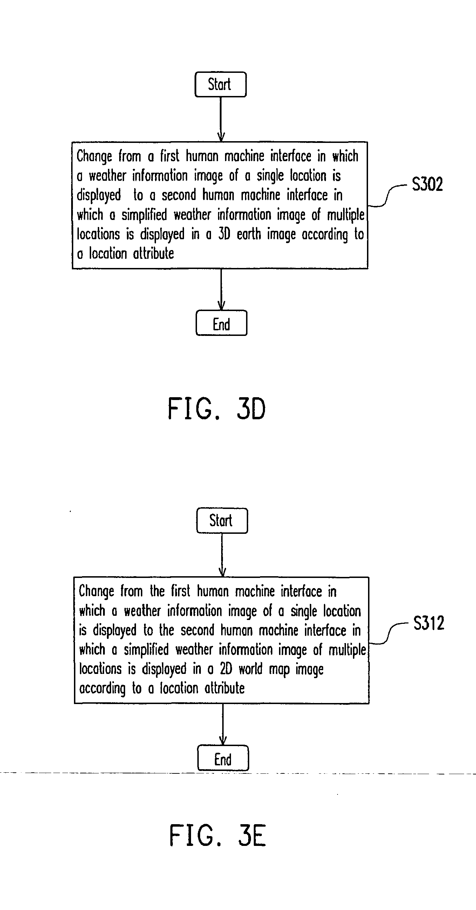

FIG. 3D is a flowchart of a human machine interface presenting method according to the first example. The procedure illustrated in FIG. 3D is corresponding to the diagram illustrated in FIG. 3B, and illustrates the detailed technical features of the step S204 more clearly. Referring to FIG. 1 and FIGs. 3A-3D, in step S302, the control unit 13 controls the display unit 11 to change from the first human machine interface in which a weather information image of a single location is displayed (as the image in FIG. 3A) to the second human machine interface in which a simplified weather information image of multiple locations is displayed in a 3D earth image 35 (as the image in FIG. 3B) according to a location attribute.

Referring to FIG. 3A and FIG. 3B from another perspective, the user reads the weather information of the same location at different time in the first human machine interface illustrated in FIG. 3A and reads the weather information of different locations at the same time in the second human machine interface illustrated in FIG. 3B. Namely, in FIG. 3B, the weather information of different locations is presented according to a time attribute. Through the human machine interface presenting method provided by the present example, the operation of the human machine interfaces is made very convenient and the operation experience of the user is improved.

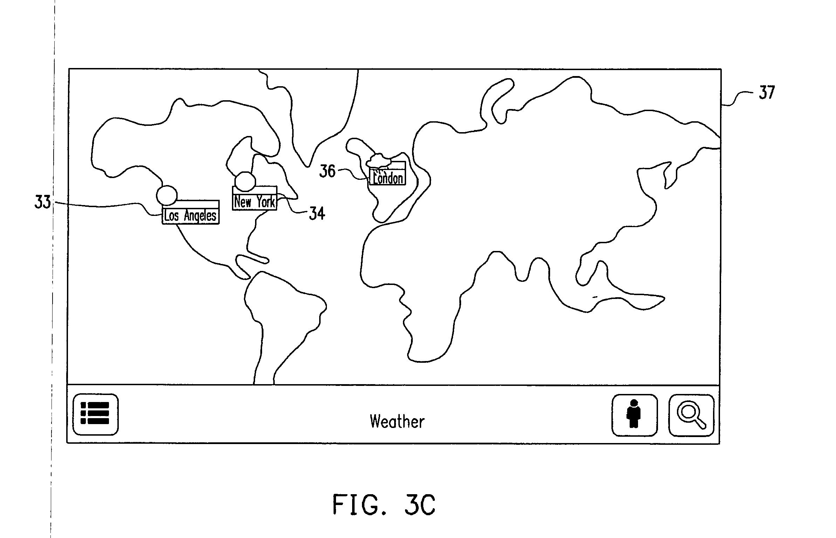

FIG. 3C is a schematic diagram of a second human machine interface according to a second example . The present example provides a second human machine interface different from that illustrated in FIG. 3B. In the present example, when the user changes the orientation of the handheld device 10 from a portrait layout to a landscape layout, the control unit 13 of the handheld device 10 generates a second attribute set according to the change and controls the display unit 11 to display a second content different from the first content according to the second attribute set. Namely, the first human machine interface presented by the handheld device 10 in the portrait layout is switched to another second human machine interface. In the second example, the first attribute set contains only one location and the weather information thereof, while the second attribute set contains the weather information of different locations.

The second human machine interface is as shown in FIG. 3C. Referring to FIG. 3C, a 2D world map image 37 is displayed in the second human machine interface, and the 2D world map image 37 displays the weather information of two or more locations (for example, the first location 33, the second location 34, and the third location 36 in FIG. 3C).

The disclosed principle is not limited to the content described above, and the 2D world map image 37 in the second human machine interface can display general weather information of all locations (and can display more than three locations). In the 2D world map image 37, the user can acquire the weather information of all the locations without any gesture. Thus, the human machine interface presenting method can greatly reduce the number of switching operations performed by a user.

FIG. 3E is a flowchart of a human machine interface presenting method according to the second example. The procedure illustrated in FIG. 3E is corresponding to the diagram illustrated in FIG. 3C, and FIG. 3C illustrates the detailed technical features of the step S204 more clearly. Referring to FIG. 1, FIG. 3A, FIG. 3C, and FIG. 3D, in step S312, the control unit 13 controls the display unit 11 to change from the first human machine interface in which a weather information image of a single location is displayed (as the image in FIG. 3A) to the second human machine interface in which a simplified weather information image of multiple locations is displayed in a 2D world map image (as the image in FIG. 3C) according to a location attribute.

The procedures illustrated in FIG. 3D and FIG. 3E can also be applied to other fields (for example, an image for presenting stock market information). Different information can be displayed in the first human machine interface and the second human machine interface by using two different attributes (for example, a location attribute and a stock market attribute). For example, the stock price information of different companies at the same location (i.e., the same stock market) is displayed in the first human machine interface, and after the handheld device 10 changes from the portrait layout to the landscape layout, the second human machine interface is displayed to present stock index information of different stock markets at different locations. Thereby, the user can conveniently acquire different information presentations by changing the orientation of the handheld device 10 without performing any menu selection or switching operation by gesture.

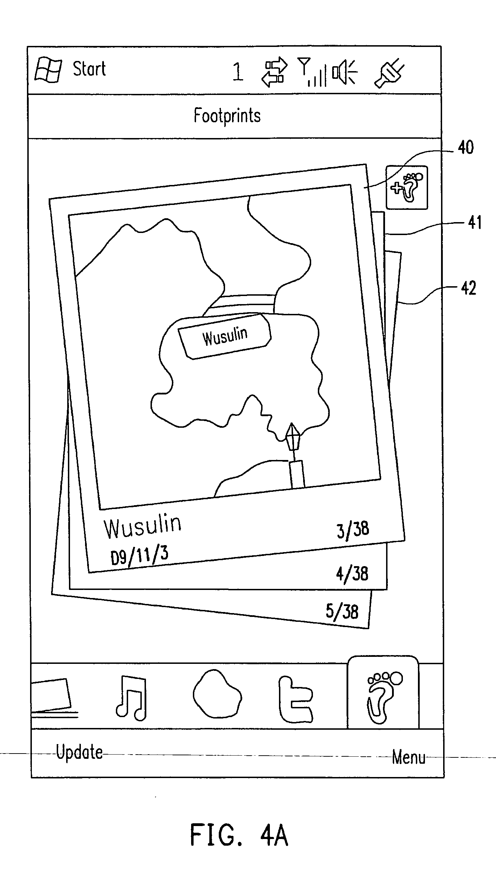

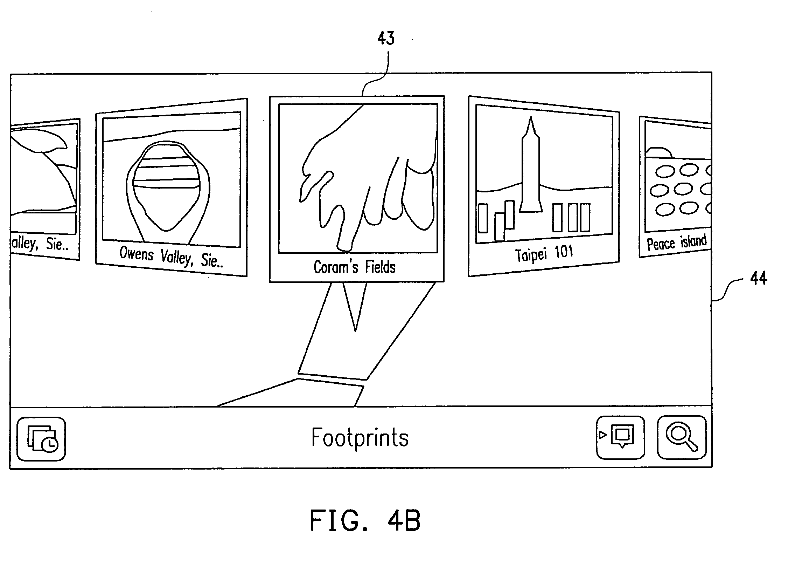

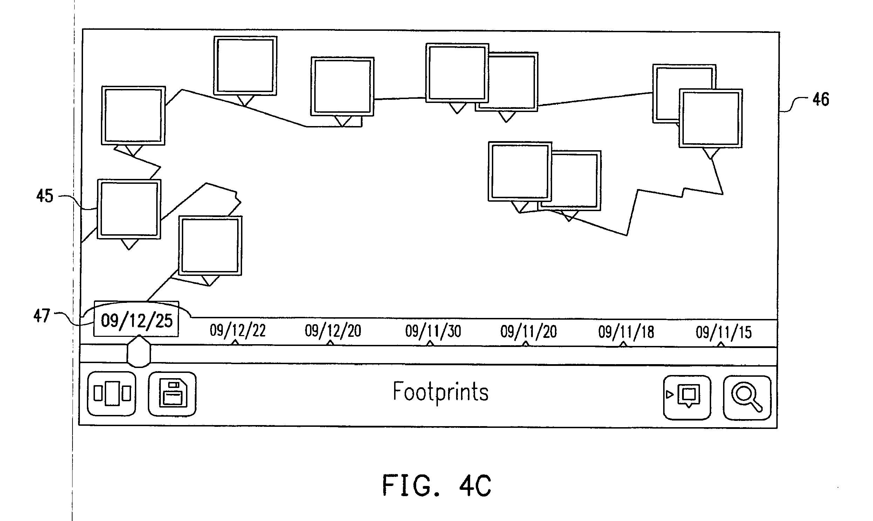

FIG. 4A is a schematic diagram of the first human machine interface of the invention. Referring to FIG. 4A, the first human machine interface includes a footprint information image in which a plurality of pictures is displayed in a stacked manner. The footprint information image is a common travel application program, which includes pictures 40, 41, and 42. However, when a user wants to acquire pictures other than the topmost picture 40 displayed in the first human machine interface, the conventional techniques do not provide such method for instantly presenting the information, and the user has to acquire information of other locations through several switching gestures or menu function selections, which can be very inconvenient. Thus, two human machine interface presenting methods for instantly presenting multiple pictures and the corresponding picture capture locations at the same time are provided as shown in FIG. 4B and FIG. 4C.

FIG. 4B is a schematic diagram of a third example of a second human machine interface. In the present example, when the user changes the orientation of the handheld device 10 from a portrait layout to a landscape layout, the control unit 13 of the handheld device 10 controls the display unit 11 to change from the first human machine interface in which a plurality of pictures is displayed in a stacked manner to the second human machine interface in which the pictures (all similar to the picture 43) respectively corresponding to multiple locations are transversely arranged (or arranged along a horizontal axis) in a 2D map 44 according to a location attribute. In addition, each picture is corresponding to a location at which the picture is originally captured in the 2D map 44. In the present example, the user can switch to different locations through gestures to obtain pictures at these locations.

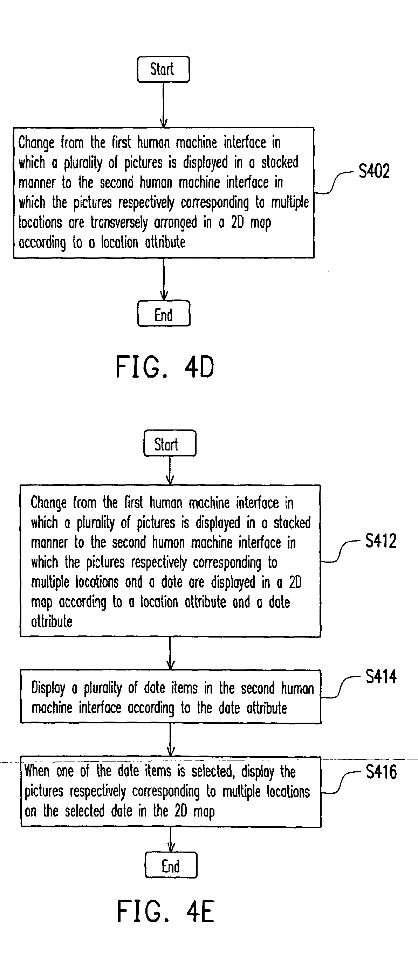

FIG. 4D is a flowchart of a method for presenting a human machine interface according to the third example. The procedure illustrated in FIG. 4D is corresponding to the diagram illustrated in FIG. 4B, and FIG. 4D illustrates the detailed technical features of the step S204 more clearly. Referring to FIG. 1 and FIGs. 4A-4D, in step S402, the control unit 13 controls the display unit 11 to change from the first human machine interface in which a plurality of pictures is displayed in a stacked manner (as the image in FIG. 4A) to the second human machine interface in which the pictures respectively corresponding to multiple locations are transversely arranged in a 2D map (as the image in FIG. 4B) according to a location attribute.

FIG. 4C is a schematic diagram of the second human machine interface according to the invention. The present invention provides a second human machine interface different from that illustrated in FIG. 4B. In the present invention, when a user changes the orientation of the handheld device 10 from a portrait layout to a landscape layout, the control unit 13 controls the display unit 11 to change from displaying the first human machine interface presented by handheld device 10 in the portrait layout to displaying another second human machine interface according to one or more attributes.

The second human machine interface is as shown in FIG. 4C. A 2D map 46 is displayed in the second human machine interface, and the 2D map 46 displays a plurality of locations and corresponding picture objects at the same time (for example, the picture 45 in FIG. 4C). In addition, a plurality of date items (for example, the date item 47 in FIG. 4C) are shown in a row below the 2D map 46. The user can select a desired date item and switch the 2D map 46 to the selected date to display pictures taken on the selected data and obtain location information corresponding to these pictures.

FIG. 4E is a flowchart of a method for presenting a human machine interface according to the invention. The procedure illustrated in FIG. 4E is corresponding to the diagram illustrated in FIG. 4C, and FIG. 4E illustrates the detailed technical features of the step S204 more clearly. Referring to FIG. 1, FIG. 4A, FIG. 4C, and FIG. 4E, in step S412, the control unit 13 controls the display unit 11 to change from the first human machine interface in which a plurality of pictures is displayed in a stacked manner (as the image in FIG. 4A) to the second human machine interface in which the pictures respectively corresponding to multiple locations and a date are displayed in the 2D map 46 (as the image in FIG. 4C) according to a location attribute and a date attribute. In step S414, the control unit 13 controls the display unit 11 to display a plurality of date items in the second human machine interface according to the date attribute. In step S416, when one of the date items is selected, the control unit 13 controls the display unit 11 to display one or more pictures respectively corresponding to multiple locations on the selected date in the 2D map 46.

Referring to FIG. 4A and FIG. 4C from another perspective, the user can see a plurality of stacked pictures captured at the same location and different time in the first human machine interface illustrated in FIG. 4A and see locations and corresponding pictures taken at different time in the second human machine interface illustrated in FIG. 4C. However, the user can select a different date in the second human machine interface illustrated in FIG. 4C to obtain pictures taken on this date and the corresponding location information. Namely, in FIG. 4C, picture objects corresponding to different locations are presented at the same time according to a location attribute and a time attribute. Through the human machine interface presenting method provided in the invention, the operation of the human machine interfaces is made very convenient and the operation experience of a user is improved.

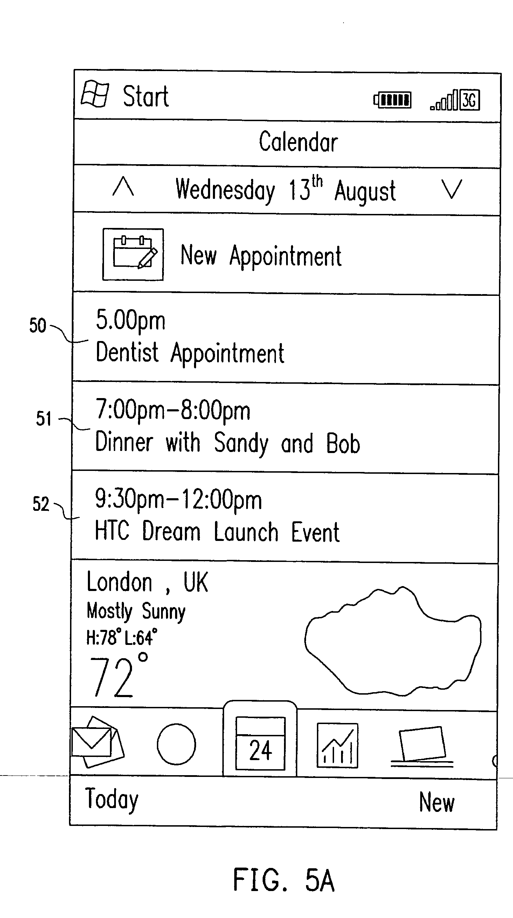

FIG. 5A is a schematic diagram of another first human machine interface. The first human machine interface illustrated in FIG. 5A includes a calendar information image in which a plurality of time information items (for example, time information items 50, 51, and 52) is displayed on a list. The time information item can be a conference, an appointment, or a specific event. When the handheld device is in the landscape layout, the first human machine interface presented by the handheld device does not display the locations respectively corresponding to the time information items.

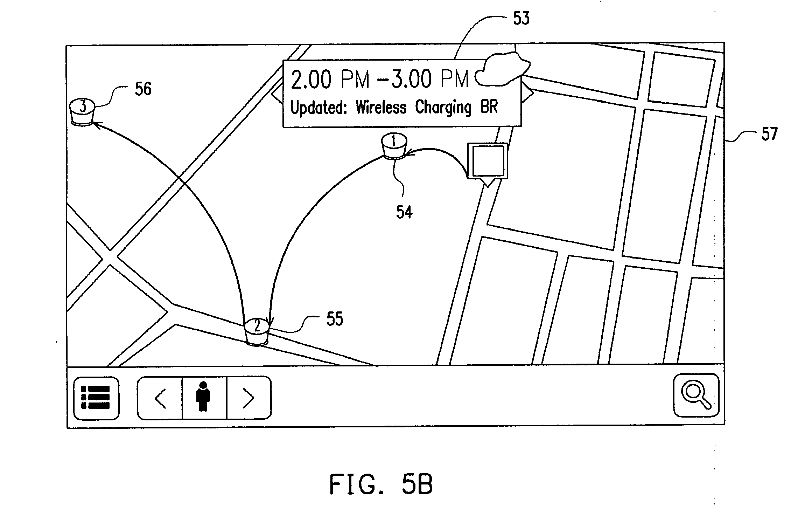

However, when the user wants to obtain the locations corresponding to these time information items 50, 51, and 52, the user still has to go through several switching gestures or menu function selections, which can be very inconvenient. Thus, according to disclosed principles, two human machine interface presenting methods for instantly presenting location information corresponding to time information items are provided, as shown in FIG. 5B.

FIG. 5B is a schematic diagram of another example of a second human machine interface. In the present example, when a user changes the orientation of the handheld device 10 from a portrait layout to a landscape layout, the control unit 13 of the handheld device 10 generates a second attribute set according to the change, and the control unit 13 controls the display unit 11 to display a second content different from the first content according to the second attribute set. Namely, the first human machine interface presented when the handheld device 10 is in the portrait layout is switched to another second human machine interface. In the fifth example, the first attribute set just contains time information and corresponding time information items, but the second attribute set contains time information, location information, and corresponding time information items.

The second human machine interface is as shown in FIG. 5B. Referring to FIG. 5B, a 2D map 57 is displayed in the second human machine interface, and the 2D map 57 displays location items 54, 55, and 56 respectively corresponding to the time information items 50, 51, and 52 in FIG. 5A. The 2D map 57 also displays a previous time information item 53. Thus, the user can conveniently obtain location items corresponding to all time information items in the second human machine interface.

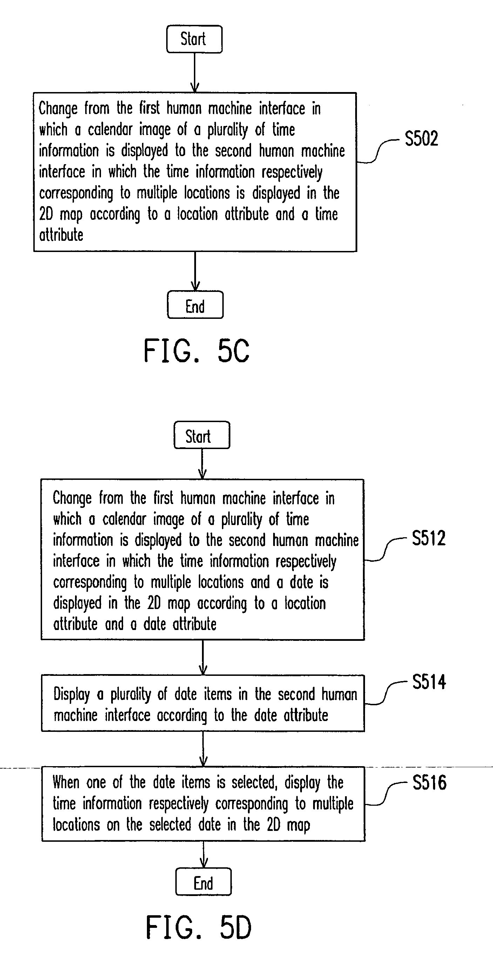

FIG. 5C is a flowchart of a method for presenting a human machine interface according to the last example. The procedure illustrated in FIG. 5C is corresponding to the diagram illustrated in FIG. 5B, and FIG. 5C illustrates the detailed technical features of the step S204 more clearly. Referring to FIG. 1 and FIGs. 5A-5C, in step S502, the control unit 13 controls the display unit 11 to change from the first human machine interface in which a calendar image of a plurality of time information is displayed (as the image in FIG. 5A) to the second human machine interface in which the time information respectively corresponding to multiple locations is displayed in the 2D map 57 (as the image in FIG. 5B) according to a location attribute and a time attribute.

In another example, the user can also directly select any location item in the 2D map 57 in the second human machine interface illustrated in FIG. 5B to search for, for example, restaurants, bus stations, subway stations (or metro stations), or convenience stores, around the location item 54. Alternatively, the user can further directly select a new location item in the 2D map 57 and insert a new time information item into the selected location item, so as to re-schedule the calendar.

FIG. 5D is a flowchart of a human machine interface presenting method according to this example. The human machine interface presenting method in FIG. 5D integrates the technique illustrated in FIG. 5B and the technique illustrated in FIG. 4C for displaying a plurality of time information items. Referring to FIG. 1, FIG. 4C, FIG. 5A, and FIG. 5D, in step S512, the control unit 13 controls the display unit 11 to change from the first human machine interface in which a calendar image of a plurality of time information is displayed to the second human machine interface in which a plurality of time information (for example, the time information items 50, 51, and 52) respectively corresponding to multiple locations (for example, the location items 54, 55, and 56) and a date is displayed in the 2D map 57 according to a location attribute and a date attribute.

In step S514, the control unit 13 controls the display unit 11 to display a plurality of date items in the 2D map 57 in the second human machine interface according to the date attribute. In step S516, when one of the date items is selected, the control unit 13 controls the display unit 11 to display a plurality of time information respectively corresponding to multiple locations on the selected date in the 2D map 57.

The present disclosure further provides a computer-readable medium, and the computer-readable medium stores a computer executable program, which is configured for executing various steps of the aforementioned method for presenting the human machine interface. The computer-readable medium is composed of a plurality of program instructions (for example, an organization chart establishing program instruction, a table approving program instruction, a setting program instruction, and a deployment program instruction, etc), and these program instructions are loaded into the handheld device and executed by the same to accomplish various steps of the human machine interface presenting method and the functions of the handheld device described above.

In summary, the invention provides a human machine interface presenting method for viewing pictures taken at different locations and dates, a handheld device using the same, and a computer readable medium thereof. When the handheld device is detected to change from a portrait layout to a landscape layout, an originally displayed first human machine interface is switched to a second human machine interface, so as to present a plurality of captured pictures with different attributes to a user. Thereby, the number of switching operations or selection operations of a user to obtain aforementioned information items is reduced in the second human machine interface. In addition, the operation of the human machine interfaces is made very convenient, and the operation experience of the user is improved.

## Claims

1. A human machine interface presenting method, adapted to a handheld device, the human machine interface presenting method comprising :
(a) displaying, by a display unit (11) of the handheld device, a first content generated according to a first attribute set;
(b) detecting, by a detecting unit (12) of the handheld device, a change in an orientation of the handheld device;
(c) generating, by a control unit (13) of the handheld device, a second attribute set according to the change; and
(d) displaying, by the display unit (11), a second content different from the first content according to the second attribute set, wherein the first attribute set and the second attribute set comprise at least an identical attribute, wherein the first content is a first human machine interface, the second content is a second human machine interface, the change is that the handheld device changes from a portrait layout to a landscape layout, and the step (d) is a step of changing from displaying the first human machine interface to displaying the second human machine interface according to the second attribute set, **characterized in that**:
the step (d) comprises:
changing (S412) from the first human machine interface in which a plurality of pictures (40, 41, 42) captured at the same location is displayed in a stacked manner to the second human machine interface in which the pictures (45) respectively corresponding to a plurality of locations and a date are displayed in a 2D map (46) according to a location attribute and a date attribute;
displaying (S414) a plurality of date items (47) in the second human machine interface according to the date attribute; and
when one of the date items, is selected, displaying (S416) the pictures respectively corresponding to a plurality of locations on the selected date in the 2D map.

2. A handheld device (10), comprising:
a display unit (11), configured for displaying a first content, wherein the first content is generated according to a first attribute set;
a detecting unit (12), configured for detecting a change in an orientation of the handheld device; and
a control unit (13), connected to the display unit and the detecting unit, configured for generating a second attribute set according to the change and controlling the display unit to display a second content different from the first content according to the second attribute set, wherein the first attribute set and the second attribute set comprise at least an identical attribute, wherein the first content is a first human machine interface, the second content is a second human machine interface, the change is that the handheld device changes from a portrait layout to a landscape layout, and the control unit (13) controls the display unit to change from displaying the first human machine interface to displaying the second human machine interface according to the second attribute set, and wherein:
when the handheld device changes from the landscape layout to the portrait layout, the control unit (13) controls the display unit to change from displaying the second human machine interface to displaying the first human machine interface, **characterized in that**:
when the detecting unit (12) detects that the handheld device changes from the portrait layout to the landscape layout, the control unit (13) controls the display unit (11) to change (S412) from the first human machine interface in which a plurality of pictures (40, 41, 42) captured at the same location is displayed in a stacked manner to the second human machine interface in which the pictures (45) respectively corresponding to a plurality of locations and a date are displaced in a 2D map (46) according to a location attribute and a date attribute;
the control unit (13) displays (S414) plurality of date items (47) in the second human machine interface according to the date attribute; and
when one of the date items is selected, the control unit (13) controls the display unit to display (S416) the pictures respectively corresponding to a plurality of locations on the selected date in the 2D map.

3. A computer-readable medium storing a computer executable program, wherein when the computer executable program is loaded to a handheld device (10), the handheld device executes the following steps:
(a) displaying, by a display unit (11) of the handheld device, a first content generated according to a first attribute set;
(b) detecting, by a detecting unit (12) of the handheld device, a change in an orientation, of the handheld device;
(c) generating, by a control unit (13) of the handheld device, a second attribute set according to the change; and
(d) displaying, by the display unit (11), a second content different from the first content according to the second attribute set, wherein the first attribute set and the second attribute set comprise at least one same attribute,
wherein the first content is a first human machine
interface, the second content is a second human machine interface, the change is that the handheld device changes
from a portrait layout to a landscape layout, and the step (d) is a step of changing from displaying the first human machine interface to displaying the second human machine interface according to the second attribute set,
**characterized in that**
the step (d) comprises:
changing (S412) from the first human machine interface in which a plurality of pictures (40, 41, 42) captured at the same location is displayed in a stacked manner to the second human machine interface in which the pictures (45) respectively corresponding to a plurality of locations and a date are displayed in a 2D map (46) according to a location attribute and a date attribute;
displaying (S414) a plurality of date items (47) in the second human machine interface according to the date attribute; and
when one of the date items is selected, displaying (S416) the pictures respectively corresponding to a plurality of locations on the selected date in the 2D map.

## Patentansprüche

1. Verfahren zur Darstellung einer Mensch-Maschine-Schnittstelle, das für ein Handheld-Gerät beschaffen ist, wobei das Verfahren zur Darstellung der Mensch-Maschine-Schnittstelle umfasst:
(A) Anzeigen, durch eine Anzeigeeinheit (11) des Handheld-Geräts, eines ersten Inhalts gemäß einer ersten Attributenmenge;
(B) Erfassen, durch eine Erfassungseinheit (12) des Handheld-Geräts, einer Änderung einer Ausrichtung des Handheld-Geräts;
(C) Erzeugen, durch einer Steuereinheit (13) des Handheld-Geräte, einer zweiten Attributenmenge gemäß der Änderung; und
(D) Anzeigen, durch die Anzeigeeinheit (11), eines zweiten Inhalts, der unterschiedlich zum ersten Inhalt ist, gemäß der zweiten Attributenmenge, wobei die erste Attributenmenge und die zweite Attributenmenge mindestens ein identisches Attribut aufweisen, wobei der erste Inhalt einer ersten Mensch-Maschine-Schnittstelle entspricht, der zweite Inhalt einer zweite Mensch-Maschine-Schnittstelle entspricht, und die Änderung darin liegt, dass das Handheld-Gerät von einem Hochformat-Layout zu einem Querformat-Layout wechselt, und der Schritt (d) einem Schritt der Änderung vom Anzeigen der ersten Mensch-Maschine- Schnittstelle zum Anzeigen des zweiten Mensch-Maschine-Schnittstelle gemäß der zweiten Attributenmenge entspricht, **dadurch gekennzeichnet, dass**:
der Schritt (d) umfasst:
Wechseln (S412) von der ersten Mensch-Maschine-Schnittstelle, in der eine Vielzahl von Bildern (40, 41, 42), die an demselben Ort aufgenommen sind, in einer gestapelten Art und Weise angezeigt werden, zu der zweiten Mensch-Maschine-Schnittstelle, in der die Bilder (45), die jeweils einer Vielzahl von Orten und einem Datum zugehörig sind, in einer 2D-Karte (46) gemäß einem Orts-Attribut und einem Datums-Attribut angezeigt werden;
Anzeigen (S414) einer Vielzahl von Datumselementen (47) in die zweite Mensch-Maschine-Schnittstelle gemäß dem Datums-Attribut; und wenn eines der Datumselemente ausgewählt wird, Anzeigen (S416) der Bilder, die jeweils einer Vielzahl von Orten an dem ausgewählten Datum in der 2D-Karte zugehörig sind.

2. Handheld-Gerät (10), umfassend:
eine Anzeigeeinheit (11), die beschaffen ist zum Anzeigen eines ersten Inhalts, wobei der erste Inhalt gemäß einer ersten Attributenmenge erzeugt ist;
eine Erfassungseinheit (12), die beschaffen ist zum Erfassen einer Änderung in einer Orientierung des Handheld-Gerätes; und
eine Steuereinheit (13), die mit der Anzeigeeinheit und der Erfassungseinheit verbunden ist, und die beschaffen ist zum Erzeugen einer zweiten Attributenmenge gemäß der Änderung und zur Steuerung der Anzeigeeinheit, um einen zweiten Inhalt anzuzeigen, der unterschiedlich zum ersten Inhalt ist, gemäß der zweiten Attributenmenge, wobei die erste Attributenmenge und die zweite Attributenmenge mindestens ein identisches Attribut aufweisen, wobei der erste Inhalt einer ersten Mensch-Maschine-Schnittstelle entspricht, der zweite Inhalt einer zweiten Mensch-Maschine-Schnittstelle entspricht, und die Änderung darin liegt, dass das Handheld-Gerät von einem Hochformat-Layout zu einem Querformat-Layout wechselt, und wobei die Steuereinheit (13) die Anzeigeeinheit steuert, um von der Anzeige der erste Mensch-Maschine-Schnittstelle zur Anzeige der zweiten Mensch-Maschine-Schnittstelle gemäß der zweiten Attributenmenge zu wechseln, und wobei:
wenn das Handheld-Gerät von dem Querformat-Layout zum Hochformat-Layout wechselt, die Steuereinheit (13) die Anzeigeeinheit steuert, um von der Anzeige der zweiten Mensch-Maschine-Schnittstelle zur Anzeige der ersten Mensch-Maschine-Schnittstelle zu wechseln, **dadurch gekennzeichnet, dass**:
wenn die Erfassungseinheit (12) erfasst, dass das Handheld-Gerät von dem Hochformat-Layout zu dem Querformat-Layout wechselt, die Steuereinheit (13) die Anzeigeeinheit (11) steuert zum Wechsel (S412) von der ersten Mensch-Mäschine-Schnittstelle, in der eine Vielzahl von Bildern (40, 41, 42), die an demselben Ort aufgenommen sind, in einer gestapelten Art und Weise angezeigt werden, zu der zweiten Mensch-Maschine-Schnittstelle, in der die Bilder (45), die jeweils einer Vielzahl von Orten und einem Datum zugehörig sind, in einer 2D-Karte (46) gemäß einem Orts-Attribut und einem Datums-Attribut angezeigt werden;
wobei die Steuereinheit (13) das Anzeigen (S414) einer Vielzahl von Datumselementen (47) in die zweite Mensch-Maschine-Schnittstelle gemäß dem Datums-Attribut steuert; und
wenn eines der Datumselemente ausgewählt wird, die Steuereinheit die Anzeigeeinheit zum Anzeigen (S416) der Bilder steuert, die jeweils einer Vielzahl von Orten an dem ausgewählten Datum in der 2D-Karte zugehörig sind.

3. Computer-lesbares Medium, das ein Computer-ausführbares Programm speichert, wobei, wenn das Computer-ausführbare Programm in ein Handheld-Gerät (10) geladen wird, das Handheld-Gerät die folgenden Schritte ausführt:
(A) Anzeigen, durch eine Anzeigeeinheit (11) des Handheld-Geräts, eines ersten Inhalts gemäß einer ersten Attributenmenge;
(B) Erfassen, durch eine Erfassungseinheit (12) des Handheld-Geräts, einer Änderung einer Ausrichtung des Handheld-Geräts;
(C) Erzeugen, durch einer Steuereinheit (13) des Handheld-Geräte, einer zweiten Attributenmenge gemäß der Änderung; und
(D) Anzeigen, durch die Anzeigeeinheit (11), eines zweiten Inhalts, der unterschiedlich zum ersten Inhalt ist, gemäß der zweiten Attributenmenge, wobei die erste Attributenmenge und die zweite Attributenmenge mindestens ein identisches Attribut aufweisen, wobei der erste Inhalt einer ersten Mensch-Maschine-Schnittstelle entspricht, der zweite Inhalt einer zweite Mensch-Maschine-Schnittstelle entspricht, und die Änderung darin liegt, dass das Handheld-Gerät von einem Hochformat-Layout zu einem Querformat-Layout wechselt, und der Schritt (d) einem Schritt der Änderung vom Anzeigen der ersten Mensch-Maschine- Schnittstelle zum Anzeigen des zweiten Mensch-Maschine-Schnittstelle gemäß der zweiten Attributenmenge entspricht, **dadurch gekennzeichnet, dass**:
der Schritt (d) umfasst:
Wechseln (S412) von der ersten Mensch-Maschine-Schnittstelle, in der eine Vielzahl von Bildern (40, 41, 42), die an demselben Ort aufgenommen sind, in einer gestapelten Art und Weise angezeigt werden, zu der zweiten Mensch-Maschine-Schnittstelle, in der die Bilder (45), die jeweils einer Vielzahl von Orten und einem Datum zugehörig sind, in einer 2D-Karte (46) gemäß einem Orts-Attribut und einem Datums-Attribut angezeigt werden;
Anzeigen (S414) einer Vielzahl von Datumselementen (47) in die zweite Mensch-Maschine-Schnittstelle gemäß dem Datums-Attribut; und wenn eines der Datumselemente ausgewählt wird, Anzeigen (S416) der Bilder, die jeweils einer Vielzahl von Orten an dem ausgewählten Datum in der 2D-Karte zugehörig sind.

## Revendications

1. Un procédé de présentation d'interface homme-machine, adapté pour un dispositif portable, le procédé de présentation d'interface homme-machine comprenant :
(a) l'affichage, au moyen d'une unité d'affichage (11) du dispositif portable, d'un premier contenu généré en fonction d'un premier jeu d'attributs ;
(b) la détection, au moyen d'une unité de détection (12) du dispositif portable, d'un changement d'orientation du dispositif portable ;
(c) la génération, au moyen d'une unité de commande (13) du dispositif portable, d'un second jeu d'attributs en fonction du changement ; et
(d) l'affichage, au moyen de l'unité d'affichage (11) d'un second contenu distinct du premier contenu en fonction du second jeu d'attributs, dans lequel le premier jeu d'attributs et le second jeu d'attributs comportent au moins un attribut identique, dans lequel le premier contenu est une première interface homme-machine, le second contenu est une seconde interface homme-machine, le changement étant que le dispositif portable commute d'un mode portrait à un mode paysage, et l'étape (d) étant une étape de changement depuis un affichage de la première interface homme-machine vers l'affichage de la seconde interface homme-machine en fonction du second jeu d'attributs, **caractérisé en ce que** :
l'étape (d) comporte :
le changement (5412) depuis la première interface homme-machine dans laquelle une pluralité d'images (40, 41, 42) capturées au même lieu est affichée en pile vers la seconde interface homme-machine dans laquelle les images (45) correspondant respectivement à une pluralité de lieux et date sont affichées suivant une carte 2D (46) en fonction d'un attribut de lieu et d'un attribut de date ;
l'affichage (5414) d'une pluralité d'éléments de date (47) dans la seconde interface homme-machine en fonction de l'attribut de date ; et
l'affichage (5416) des images correspondant respectivement à une pluralité de lieux sur la date sélectionnée dans la carte 2D lors de la sélection de l'un des éléments de date.

2. Un dispositif portable (10), comprenant :
une unité d'affichage (11), configurée pour afficher un premier contenu, dans lequel le premier contenu est généré en fonction d'un premier jeu d'attributs ;
une unité de détection (12), configurée pour détecter un changement d'orientation du dispositif portable ; et
une unité de commande (13), connectée à l'unité d'affichage et à l'unité de détection, configurée pour générer un second jeu d'attributs en fonction du changement et pour commander l'unité d'affichage pour l'affichage d'un second second contenu distinct du premier contenu en fonction du second jeu d'attributs, dans lequel le premier jeu d'attributs et le second jeu d'attributs comportent au moins un attribut identique, dans lequel le premier contenu est une première interface homme-machine, le second contenu est une seconde interface homme-machine, le changement étant que le dispositif portable commute d'un mode portrait à un mode paysage, et l'unité de commande (13) commandant l'unité d'affichage pour commuter depuis un affichage de la première interface homme-machine vers l'affichage de la seconde interface homme-machine en fonction du second jeu d'attributs, et dans lequel :
lors du changement du dispositif portable depuis le mode paysage vers le mode portrait, l'unité de commande (13) commande l'unité d'affichage pour changer l'affichage de la seconde interface homme-machine vers la première interface homme-machine, **caractérisé en ce que** :
lorsque l'unité de détection (12) détecte que le dispositif portable commute du mode portrait vers le mode paysage, l'unité de commande (13) commande l'unité d'affichage (11) de façon à commuter (5412) depuis la première interface homme-machine, dans laquelle une pluralité d'images (40, 41, 42) capturées à un même endroit est affichée en pîle, vers la seconde interface homme-machine dans laquelle les images (45) correspondant respectivement à une pluralité de lieux et de dates sont affichées suivant une carte 2D (46) en fonction d'un attribut de lieu et d'un attribut de date ;
l'unité de commande (13) affiche (5414) une pluralité d'éléments de date (47) dans la seconde interface homme-machine en fonction de l'attribut de date ; et
lorsque l'un des éléments de date est sélectionné, l'unité de commande (13) commande l'unité d'affichage pour l'affichage (5416) des images correspondant respectivement à une pluralité de lieux sur la date sélectionnées dans la carte 2D.

3. Un support de programme d'ordinateur pour le stockage d'un programme exécutable par un ordinateur, dans lequel le programme exécutable pour un ordinateur est chargé dans un dispositif portable (10), le dispositif portable exécutant les étapes suivantes :
(a) l'affichage, au moyen d'une unité d'affichage (11) du dispositif portable, d'un premier contenu généré en fonction d'un premier jeu d'attributs ;
(b) la détection, au moyen d'une unité de détection (12) du dispositif portable, d'un changement d'orientation du dispositif portable ;
(c) la génération, au moyen d'une unité de commande (13) du dispositif portable, d'un second jeu d'attributs en fonction du changement ; et
(d) l'affichage, au moyen de l'unité d'affichage (11) d'un second contenu distinct du premier contenu en fonction du second jeu d'attributs, dans lequel le premier jeu d'attributs et le second jeu d'attributs comportent au moins un attribut identique, dans lequel le premier contenu est une première interface homme-machine, le second contenu est une seconde interface homme-machine, le changement étant que le dispositif portable commute d'un mode portrait à un mode paysage, et l'étape (d) étant une étape de changement depuis un affichage de la première interface homme-machine vers l'affichage de la seconde interface homme-machine en fonction du second jeu d'attributs, **caractérisé en ce que** :
l'étape (d) comporte :
le changement (5412) depuis la première interface homme-machine dans laquelle une pluralité d'images (40, 41, 42) capturées au même lieu est affichée en pile, vers la seconde interface homme-machine dans laquelle les images (45) correspondant respectivement à une pluralité de lieux et dates sont affichées suivant une carte 2D (46) en fonction d'un attribut de lieu et d'un attribut de date ;
l'affichage (5414) d'une pluralité d'éléments de date (47) dans la seconde interface homme-machine en fonction de l'attribut de date ; et
l'affichage (5416) des images correspondant respectivement à une pluralité de lieux sur la date sélectionnée dans la carte 2D lors de la sélection de l'un des éléments de date.
